(19) **Europäisches Patentamt / European Patent Office / Office européen des brevets**

(11) **EP 2 584 342 B1**

(12) **EUROPEAN PATENT SPECIFICATION**

(45) Date of publication and mention
of the grant of the patent:
**18.03.2020  Bulletin 2020/12**

(51) Int Cl.:
**G01N 21/64** *(2006.01)*    *G01N 21/27* *(2006.01)*

(21) Application number: **11008334.2**

(22) Date of filing: **17.10.2011**

(54) **Method for quantitative optical measurements and laboratory apparatus**

Verfahren für quantitative optische Messungen und Laborvorrichtung

Procédé de mesures optiques quantitatives et appareil de laboratoire

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.04.2013  Bulletin 2013/17**

(73) Proprietor: **Eppendorf AG**
**22339 Hamburg (DE)**

(72) Inventors:
• **Wild, Michael**
**22339 Hamburg (DE)**

• **Jolie, Christoph**
**22339 Hamburg (DE)**

(74) Representative: **Ricker, Mathias et al**
**Wallinger Ricker Schlotter Tostmann
Patent- und Rechtsanwälte Partnerschaft mbB
Zweibrückenstrasse 5-7
80331 München (DE)**

(56) References cited:
**EP-A1- 1 431 745      US-A- 6 075 613
US-A1- 2003 105 195    US-A1- 2004 217 271**

**Description**

The invention relates to a method for quantitative optical measurements and a laboratory apparatus, which applies said method.

Such methods are used, in particular, in chemical, biochemical, biological or biomedical laboratory environments to determine the concentration of chemical, biochemical, biological or biomedical analytes in sample solutions. A typical principle of such optical measurements is based on the measurement of fluorescent light. The analyte is marked by a fluorescence marker, which can be excited by the excitation light of a light source. The fluorescence marker receives the light and emits a sample light, typically at a different wavelength (fluorescence). The intensity of the detected sample light is used to derive the concentration of the analyte in the solution. Ideally, the concentration of the analyte is proportional to the detected intensity and can be determined using a calibration factor. Such a calibration factor can be predetermined, e.g. contained in a dataset in the memory of a laboratory apparatus, or can be determined by conventional calibration methods. Laboratory apparatus, which use the measurement of fluorescence light are, for example, fluorometer, which determine the intensity of fluorescence sample light, fluorescence spectrometers, which determine the intensity of fluorescence sample light in dependence on the wavelength of the excitation light, or realtime PCR instruments, which monitor the progress of a polymerase chain reaction (PCR) by observing the fluorescent light from the PCR samples over the time.

Additional technical effort for performing the optical measurement is required in the case that it is desired to measure multiple analytes, which have substantially different concentrations. The electric photodetectors, which are typically used as detector devices in laboratory apparatus for performing optical measurements, are limited to specific ranges of detectable light intensities for a predetermined set of operational parameters of the laboratory apparatus and, in particular, the detector device. Intensities within said ranges can be detected without changing the set of operational parameters. For measuring intensities outside from said range, the set of operational parameters of the detector device has to be varied. Typically, electric gain is used to vary the sensitivity of a detector device. Alternatively, the intensity of the excitation light is varied to simulate a variation of the sensitivity parameter of the laboratory apparatus. Many commercially available detector devices are designed to automatically provide or to use a sensitivity parameter, which is suitable to measure the intensity of the incident sample light. The detector device automatically determines the - more or less correct - intensity in regard to the sensitivity parameter, which was applied during the measurement. In an ideal case, apart from noise and signal saturation or overload, the intensity I is proportional to the value of the sensitivity parameter S, at least in a substantially linear area of the function I(S). I(S) depends, as a rule, also on the wavelength, at which the sample light is detected by the detector device.

Anyway, the detector devices can use internal corrections to apply the correct relations between intensity and sensitivity. The correction may by valid for the detector device alone, but may need further modification when the detector device is part of a laboratory apparatus. In a laboratory device, the combination of a detector device with the measurement setup of a laboratory devices, including the light sources, filters, means for guiding the optical path will lead to a situation, where the use of different sensitivity parameters leads to a reduced accuracy of the intensities evaluated by the detector device. In particular, the accuracy of a comparison of the intensities, which are detected at different sensitivity parameters, is reduced, because a precise calibration of the whole laboratory apparatus is missing.

One possibility of increasing the accuracy of a comparison of the intensities, which are measured for different analytes, is to use only a single value of the sensitivity parameter for the operation of the detector device. In this case, the range of intensities, which can be detected by the detector device, is limited by noise effects and signal saturation effects such that a small range only is available for the measurement. Moreover, is a disadvantage that the optimal sensitivity parameter has to be found before, for example manually by the user.

EP 1 431 745 A1 describes a fluorescence analyzer implementing a solution for compensating the spillover fluorescence, which is measured if the fluorescence of multiple dyes in samples are recorded in parallel by detection channels with specific gain parameters. The spillover fluorescence in each channel is dependent on the gain, which is used for the detection channel. The spillover compensation solution provides channel-specific, pairwise functional relationships between the measured fluorescence and the gain value.

It is the object of the present invention to provide a method for quantitative optical measurements, which provides an increased range for measuring light intensities, which can be compared with sufficient accuracy. It is a further object of the present invention to provide a laboratory apparatus, which utilizes the method according to the invention.

The object is met by the method according to claim 1 and the laboratory apparatus according to claim 8. Preferred embodiments of the invention are subjects of the sub claims.

The method according to the invention is a method for the quantitative optical measurement of a characteristic property of at least one analyte in at least one laboratory sample, in particular for the fluorescence measurement of at least one biochemical or biological sample, the method using a laboratory apparatus, which has at least one light source and at least one detector device, the apparatus utilizing at least sensitivity parameter S, which controls the capability of the laboratory apparatus to detect a signal by means of the at lest one detector device, the method using source light for causing the at least one sample to emit a sample light, and the at least one detector device for detecting sample light and the method utilizing the at least one sensitivity parameter S to detect the corresponding at least one intensity I of the sample light, preferably utilizing at least two different sensitivity parameters S and detecting the corresponding at least two intensities I of the sample light, the method comprising the steps:

- determining at least one reference point (S_ref; I_ref);
- using at least one first sensitivity parameter S_m1, which is not the same as S_ref, for measuring at least one first intensity I_m1 of sample light assigned to a first analyte;
- determining a quantity Q1, which is a measure for the slope of a line, which is determined by utilizing the at least one reference point (S_ref; I_ref) and the at least one measurement point (S_m1; I_m1);
- using the quantity Q1 for calculating a first analyte value C_m1, which is dependent on Q1 and which is characteristic for a property of the first analyte, in particular for a concentration of the first analyte in the at least one sample.

The quantity Q1 is the slope of a line, preferably a straight line, which is defined at least by the two points (S_ref; I_ref) and (S_m1; I_m1), Q1 being calculated according to the formula

$$Q1 = (I\_m1 - I\_ref) / (S\_m1 - S\_ref),$$

or according to an interpolation function or -line or a regression function or -line through (S_ref; I_ref) and multiple different measurement points (S_m1; I_m1), and wherein C_m1 is proportional to Q1, preferably C_m1 = Q1. The reference point is a standardization point, which preferably is the same for at least one analyte (or at least two analytes), which, in particular, is measured utilizing at least two different sensitivity parameters S. Furthermore, the reference point, preferably, is the same for at least one predetermined characteristical wavelength of detection. Preferably, one standardization point is used for each characteristical wavelength of detection.

In another preferred embodiment of the method, the quantity Q1 is the slope of a straight interpolation line or regression line, which is adapted to (S_m1; I_m1) and multiple reference points (S_n1, I_n1), which are determined using the same first analyte.

Preferably, the relation I(S) is considered to by dependent also on the characteristical wavelength of the sample light, which is detected by the detector device. Typically, the at least one sample is illuminated with source light, which has at least one characteristical wavelength ω_s, which is the wavelength, where the source light intensity I(ω_s) has a maximum. The source light can be monochromatic, which means, it emits light substantially only at the characteristical wavelength. The detector device can be equipped with optical filters to detect only one or more predetermined spectral region(s) around a characteristical wavelength ω of detection, which preferably corresponds to the characteristical emission wavelength, at which the spectrum of sample light has a maximum. This emission wavelength can be defined by the fluorescence of an analyte. Preferably, the method comprises the step to let the detector device detect the intensity of the sample light in dependence on at least one predetermined characteristical wavelength of detection, and wherein the at least one reference point(s) (S_ref; I_ref) is respectively determined in dependence on the characteristical wavelength of detection, thus assigning the at least one reference point(s) (S_ref; I_ref) to each characteristical wavelength of detection.

The method is applied, preferably, in chemical, biochemical, biological or biomedical laboratories to determine a characteristic property of at least one analyte in at least one sample. Preferably, the characteristic property is the concentration of an analyte, preferably a chemical, biochemical, biological or biomedical analyte, in a sample, preferably a chemical, biochemical, biological or biomedical sample.

Typically, a plurality of different samples are provided separately, each sample having at least one analyte or exactly one analyte to be optically measured, preferably by a fluorescence measurement. It is also possible and preferred, that one sample is measured, which has two or more analytes to be measured. A laboratory apparatus for performing the method of the invention can be configured to hold one sample, which, for example, can be exchanged by the user by another sample to be measured, or to hold multiple samples, for measuring multiple samples arranged in the laboratory apparatus, in parallel or sequentially.

Preferably, the method provides that a specific sensitivity parameter is chosen, preferably automatically, preferably semi-automatically or preferably manually, for a specific concentration of the analyte in the sample, such that the sensitivity parameter allows to operate the detector device in a linear range, where the measured intensity I is substantially linear to the sensitivity parameter S. Typically, each sample with each analyte is measured with a specific sensitivity parameter.

The use of a reference point (S_ref; I_ref) for deriving C_m1, in particular the concentrations of the analytes in the samples, increases the accuracy when comparing -or further calculating - the values of the concentrations. Instead of deriving the concentration, e.g. the concentration CON1 of a first analyte, just from one measurement, e.g. according to CON1 = b, b being a calibration function b(I_m1) or CON1 = b(I_m1 - I_m0), and I_m0 being a measurement with a blank sample without analyte, according to the invention the concentration is derived from the slope C_m1 of a straight line, which runs through the reference point and the measured point (S_m1; I_m1) or which is a regression line through multiple reference points and the measured point.

The reference point (S_ref; I_ref) is a standardization point (S_fix; I_fix) = (S_ref; I_ref) and the step of determining a standardization point (S_fix; I_fix) comprises the steps:

• using the source light and at least one optical standard sample for letting the at least one standard sample emit at least one standard sample light, and letting the detector device detect the at least one standard sample light for determining the first intensity I_1 of a first standard sample light as a first function of the variable sensitivity parameter S, according to I_1(S) = c1 * (S - S_1_0) + I_1_0, wherein c1 is a factor depending on the first optical standard and S_1_0 and I_1 0 are the parameters for defining the straight line, which can be determined using the dataset (S; I_1);
• utilizing at last one second function I_2(S);
• determining (S_fix; I_fix) to be an intersection point between the at least two functions I_1(S) and I_2(S).

In this case, a single standardization point (S_fix; I_fix), which preferably is determined prior to the measurement of the samples, is used for the measurement of different analytes, preferably in different samples, preferably for least at one predetermined characteristical wavelength of detection of the detector device, wherein preferably one individual standardization point (S_fix; I_fix) is assigned to one characteristical wavelength of detection. I_1(S) is determined by variation of S and detecting the associated intensity I_1(S). In order to determine S_1_0 and I_1_0, the dataset (S; I_1) should contain at least two points (S; I_1). Preferably, the dataset (S; I_1) contains a plurality of points (S; I_1). The method of determining I_1(S) can comprise a conventional regression or interpolation method for fitting a function I_1(S) to the measured pairs of values (S; I_1). The standardization point (S_fix; I_fix) can be shared by all calculations C_m1, C_m2, C_m3, C_m4, ... C_mN of a measurement of a number of N (N>0) analytes. This further improves the overall accuracy of a comparison of different intensities, which are related to measurements at different sensitivity parameters S_m1, S_m2, S_m3, S_m4, ... S_mM, wherein M can be a number, which preferably is smaller than or equal to N.

Preferably, an optical standard sample is an optical sample, which is predetermined and representative for a certain concentration of an analyte, in particular representative for a certain concentration of a fluorescence marker. Usually, optical standard samples are available as a set of samples, wherein an optically interacting (e.g. by fluorescence) substance is contained in each sample with a different predetermined concentration. However, standard samples can be prepared by the user, e.g. by dissolving a sample analyte in a solution at different predetermined concentrations. The parameter c1 can be determined using a conventional calibration method.

Preferably, the method according to the invention comprises the further steps:

- using at least one second sensitivity parameter S_m2 for measuring at least one second intensity I_m2 of sample light assigned to the first analyte, or preferably, to a second analyte;
- determining a quantity Q2, which is a measure for the slope of a line, which is determined by utilizing the same or another standardization point (S_fix; I_fix) and the at least one measurement point (S_m2; I_m2);
- using the quantity Q2 for calculating an analyte value C_m2, which is dependent on Q2 and which, preferably is the second analyte value, which is assigned to the second analyte, and which is characteristic for the property of the analyte, preferably the second analyte, in particular for a concentration of the analyte, preferably the second analyte, in the at least one sample, in particular according to the formula
- Q2 = (I_m2 - I_fix)/(S_m2 - S_fix) or according to a regression line through (S_fix; I_fix) and multiple different measurement points (S_m2; I_m2).
- and wherein, in particular, C_m2 is proportional to Q2, in particular, C_m2 = Q2.

This applies, in particular, if more than one analyte is measured, for example, if at least two analytes are measured. In this case, in particular, the method according to the invention preferably comprises the further step of comparing the first sample value C_m1 and the second sample value C_m2 for determining a comparison value. A comparison can be performed, for example, by calculating a difference, for example, for receiving a result which is proportional to (C_m1 - C_m2). Further, a comparison can be performed, for example, by calculating a division operation, for example, for receiving a result which is proportional to (C_m1 / C_m2). Other comparison operations are possible. In particular, C_m2 can be measured using also the first analyte. In this case, the measurement of the same first analyte at two different sensitivity parameters can be used to determine, for example, an average quantity <C_m>, which can be <C_m> = 0.5 * (C_m1 + C_m2). This can improve the accuracy of the result of determining the property of the first analyte, e.g. the concentration.

In the method of determining a standardization point, the second function I_2(S) can be I_2(S) = constant, for example I_2(S) = 0. This can achieve sufficient accuracy for a comparison operation of different intensities, measured for different analytes at different sensitivity parameters.

Preferably, in the step of determining a standardization point, at least two optical standard samples are used, for additionally determining the second intensity $I_2$ of at least also the second standard sample light as the second function $I_2(S)$ of the variable sensitivity parameter S, according to $I_2(S) = c2 * (S - S_2\_0) + I_2\_0$, wherein c2 is a factor depending on the second optical standard, and which can be received by conventional calibration methods. $S_2\_0$ and $I_2\_0$ are the parameters for defining the straight line, which can be determined using the dataset $(S; I_2)$. $I_2(S)$ is calculated by variation of S and detecting the associated intensity $I_2(S)$. The method of determining $I_2(S)$ can comprise a conventional regression or interpolation method for fitting a function $I_2(S)$ to the measured pairs of values $(S; I_2)$. In many cases, the use of two straight lines $I_1(S)$ and $I_2(S)$ has proved to achieve sufficient accuracy for a comparison operation of different intensities, measured for different analytes at different sensititvity parameters.

Preferably, the method of determining a standardization point comprises the steps:

- utilizing at least three optical standards to determine three intensities of at least three standard sample lights as the functions $I_1(S)$, $I_2(S)$ and $I_3(S)$;
- determining $(S\_fix; I\_fix)$ to be an estimated intersection point between the at least three functions $I_1(S)$, $I_2(S)$ and $I_3(S)$, using an mathematical estimation method .

Here, additionally determining the third intensity $I_3$ of at least also the third standard light as the third function $I_3(S)$ of the variable sensitivity parameter S, according to $I_3(S) = c3 * (S - S_3\_0) + I_3\_0$, wherein c3 is a factor depending on the third optical standard sample, and which can be received by conventional calibration methods. $S_3\_0$ and $I_3\_0$ are the parameters for defining the straight line, which can be determined using the dataset $(S; I_3)$. The method of determining $I_3(S)$ can comprise a conventional regression or interpolation method for fitting a function $I_3(S)$ to the measured pairs of values $(S; I_3)$.

In case that three or more than three functions $I_1(S)$, $I_2(S)$ and $I_3(S)$ are used for determining $(S\_fix; I\_fix)$, it is likely that the three or more function do not have a single intersection point. Probably, three intersection point of pairs of functions will exist. In this case, any mathematical method can be used, preferably, which defines the intersection point to be an estimated intersection point. The mathematical estimation method can be a geometrical method, or a method which averages the coordinates of the intersection points of pairs of functions, or any other regression method.

In most cases, the use of at least three straight lines $I_1(S)$, $I_2(S)$ and $I_3(S)$ has proved to efficiently achieve optimal accuracy at reasonable effort for a comparison operation of different intensities, measured for different analytes at different sensititvity parameters.

Preferably, the mathematical estimation method provides the following steps:

- determining $(S\_fix; I\_fix)$ to be a point within the area, which is enframed by the at least three functions $I_1(S)$, $I_2(S)$ and $I_3(S)$.

In most cases, this choice of $(S\_fix; I\_fix)$ is most efficient and shows sufficient accuracy for a comparison operation of different intensities, measured for different analytes at different sensitivity parameters.

Preferably, at least three or exactly three optical standard samples are used to determine three straight line functions $I_1(S)$, $I_2(S)$ and $I_3(S)$, and wherein the mathematical estimation method provides the following steps:

- determining the three intersection points IS1, IS2, IS3 of the three pairs of straight lines $(I_1(S); I_2(S))$, $(I_2(S); I_3(S))$, and $(I_1(S); I_3(S))$;
- determining $(S\_fix; I\_fix)$ to be the intersection point of the bisecting lines of the three angles of the triangle defined by the three intersection points IS1, IS2, IS3.

This choice of $(S\_fix; I\_fix)$ is very efficient and shows improved accuracy for a comparison operation of different intensities, measured for different analytes at different sensitivity parameters.

Instead of using a common standardization point, which is used for all measurements $C\_m1$, $C\_m2$, $C\_m3$, $C\_m4$, ... $C\_mN$ with different sensitivity parameters $S\_m1$, $S\_m2$, $S\_m3$, $S\_m4$, ... $S\_mM$, preferably at least for one characteristical wavelength of detection, it is possible to multiple times use one analyte in a sample for more precisely determining each value $C\_m1$, $C\_m2$, $C\_m3$, $C\_m4$, ... $C\_mN$. In this case, in particular, the method according comprises the modified steps of determining at least one reference point $(S\_ref; I\_ref)$:

- using at least one further sample light assigned to the first analyte for letting the detector device detect at least one reference light from said sample, by determining a dataset with pairs of the first intensity $I_1$ of the first reference light in dependence from the variable sensitivity parameter S;
- utilizing at least one pair $(S; I_1)$ of the dataset to determine the at least one reference point to be $(S\_ref; I\_ref) = (S; I_1)$.

The dataset can comprise two ore more points $(S\_mi; I\_mi)$. The value $C\_m1$ can be derived from the slope of the straight line, which runs through two points $(S\_m1; I\_m1)$ and $(S\_m2; I\_m2)$ of measurements of the first analyte. This method has shown to have a higher accuracy than determining $C\_m1 = d * I\_m1$, d being a calibration factor or function.

The value $C\_m1$ can further be derived from the slope of the straight line, which runs through multiple points (S_ni; I_ni) of measurements of the first analyte: preferably, multiple reference points are determined using the detected intensities I_n1 of the sample light assigned to the first analyte at different sensitivity parameters S_n1, wherein a conventional regression method is used to define a regression line through the measured point (S_m1; I_m1) and the multiple reference points (S_n1; I_n1), and wherein the first analyte value C_m1 is derived from the slope c_i of the regression line, wherein C_m1 is in particular proportional to c_i.

Preferably, the first analyte value C_m1 is used to determine the concentration of the first analyte in the at least one sample, according to CON1 = a(C_m1) or CON1 = a (C_m1 - C_m0), wherein a is a predetermined function or a constant), which is in particular determinable using a conventional calibration method, and wherein C_m0 is the value of a blank sample, which does not contain the analyte. C_m0 can be determined by performing a measurement of the background radiation, e.g. a background fluorescence measurement, using the laboratory apparatus for performing the method, which contains the same sample holder, sample receptacle and preferably the solution, which solution is the same used for solving the analyte. The sample can be defined as the analyte with the solution, in which the analyte is solved. Preferably, CON1 is proportional to C_m1 or to (C_m1 - C_m0).

The sensitivity parameter can be understood to be any operational parameter of a laboratory apparatus, which has a detector device, which parameter controls the capability of the laboratory apparatus to detect a signal by means of a detector device. Usually, "sensitivity" of a sensor is defined as an output voltage change for a defined change in input. Preferably, the sensitivity parameter is varied by variation of at least one operational parameter of the detector device, e.g. an electronic gain factor of an electrical detector device, e.g. a photometer. It is also possible and preferred that the sensitivity parameter is varied by variation of the intensity of the source light, which is used to measure the at least one analyte in the at least one sample. Also in this case, the value of the detected signal is increased, which means that the effect of increasing the intensity of the light source is equivalent to increasing the sensitivity of a sensor.

The laboratory apparatus according to the invention for quantitative optical measurements of a characteristic property of at least one analyte in at least one laboratory sample, in particular fluorescence measurements of at least one biochemical or biological sample, comprising at least one light source for illuminating the at least one sample with source light, at least one detector device for detecting sample light, and an electric control device, wherein the electric control device is configured to at least automatically calculate in dependence on Q1, using the method according to the invention or one of its preferred embodiments, the first analyte value C_m1, which is characteristic for a property of the first analyte, in particular for a concentration of the first analyte in the at least one sample.

Preferably, the method according to the invention is implemented by the apparatus or the control device, preferably by utilizing a computer program code, which preferably is stored on a memory device, e.g. optical data disc or a flash memory. Preferably, a laboratory apparatus according to the invention is configured to store said computer program code in a data memory of the laboratory apparatus. Preferably, said computer program code is executable and the laboratory apparatus according to the invention is configured to execute the computer program code for applying the method according to the invention.

Preferably, the laboratory apparatus according to the invention is configured to be a fluorometer, or a fluorescence spectrometer, or a realtime PCR instrument. Other preferred method steps can be derived from the description of the functions of the laboratory apparatus according to the invention.

The laboratory apparatus preferably comprises other components, e.g. a sample holder area for accommodating a sample holder, for holding at least one sample vessel, in particular for holding single vessels, e.g. sample tubes, capped or uncapped, or for holding multiple sample receptacles, e.g. microtiter plates or PCR-plates, user interfaces, e.g. a keyboard, display or a touchscreen, data exchange interfaces and connections. The laboratory apparatus, in particular the sample holder, can comprise temperature devices, e.g. Peltier elements, for heating and/or cooling the sample holder, and/or thermosensors. The laboratory apparatus and the electric control device can comprise electric control loops for controlling the temperature of the sample holder or the samples, respectively. Preferably, the laboratory apparatus is configured to apply a temperature program to the sample holder, e.g. for repeatedly adjust the temperature of the sample holder through different temperature levels (thermal cycling). Preferably, the laboratory apparatus is configured to be a thermocycler for performing realtime PCR.

A preferred use of the method according to the invention or the laboratory apparatus according to the invention is to optically measure the fluorescence light of biochemical samples or biological samples, in particular PCR samples.

Moreover, further advantages, features and applications of the present invention can be derived from the following embodiments of the method and the laboratory apparatus according to the present invention with reference to the drawings. In the following, equal reference signs substantially describe equal devices.

Fig. 1 schematically shows an embodiment of a laboratory device according to the invention, which is configured to apply the method according to the invention.

Fig. 2 schematically shows a flow diagram of an embodiment of the method according to the invention.

Fig. 3a, 3b, 3c and 3d show, respectively, a diagram with the curves, which are used to determine a standardization point in step 11 of the method according to Fig. 2.

Fig. 4 shows a table, which can be used by embodiments of the method and the laboratory apparatus according to the invention, which table assigns a sensitivity parameter to the detected intensity of sample light, according to step 16 of the method in Fig. 2.

Fig. 5 schematically shows how the concentration of the analyte in the sample is derived from the measured point and the standardization point, according to step 17 of the method in Fig. 2.

Fig. 6 schematically shows a flow diagram of another method.

Fig. 7 schematically shows how the concentration of the analyte in the sample is derived from the measured point and the standardization point, according to step 23 of the method in Fig. 6.

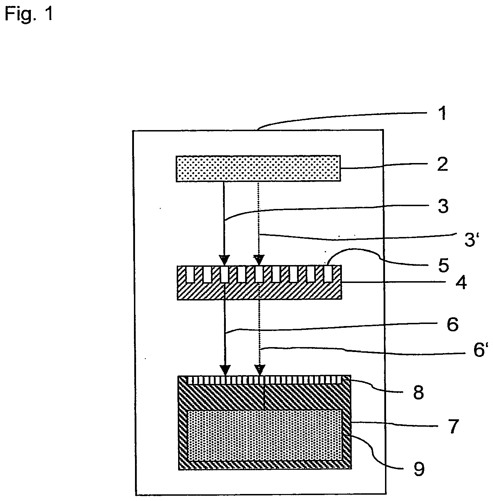

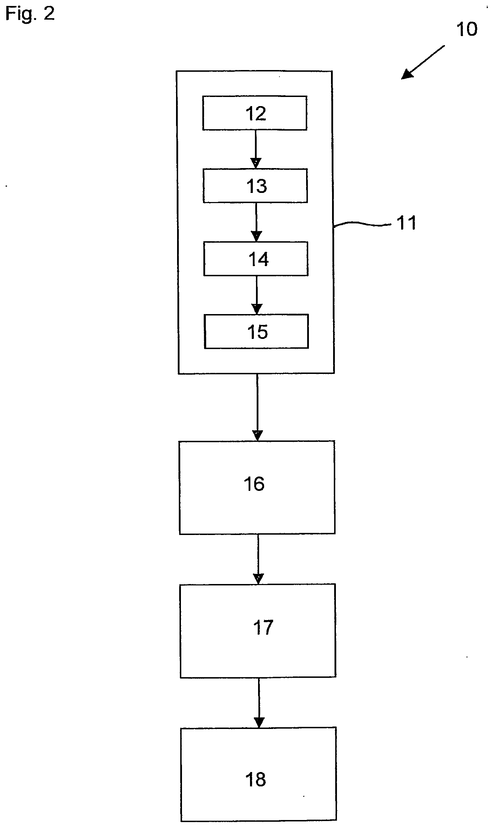

Fig. 1 a laboratory device 1 according to the invention, which is configured to apply the method 10, which is shown in Fig. 2. The laboratory apparatus is a fluorescence spectrometer 1 for performing fluorescence measurements of multiple biochemical or biological samples, e.g. PCR-samples. The laboratory apparatus has a light source 2, which is configured to emit light at one excitation wavelength of 470 nm, in the case of the embodiment, in particular to emit the light 3 to a first sample 5 within a sample holder 4, and to subsequently or simultaneously emit light 3' to each analyte in each sample of the sample holder. The embodiment of the laboratory apparatus works in the same way, if only one sample receptacle is provided, which contains two reagents. The laboratory apparatus further comprises the detector device 7, which has at least one photodetector 8 for detecting the sample lights 6, 6', and for providing electrical signals, which quantify the intensity of a sample light 6, 6'. The detector device 7 is a commercial FluoSens-module, QIAGEN GmbH, Germany. The sensitivity parameter of the FluoSens-module can be changed by controlling the intensity of light sources (LED which emit the excitation light). The photodetector has two characteristical wavelengths of detection, which are 520 nm and 560 nm, in the embodiment.

Moreover, the detector device or the laboratory apparatus, respectively, have an electric control device 9. The electric control device 9, preferably, comprises a microprocessor, or at least a CPU and memory, in particular RAM and solid memory. The electric control device is configured, preferably, for applying the method according to the invention, in particular the method 10 or 20. This means that, for example, the electric control device comprises programmable circuits, which are programmed to perform the method according to the invention. Said programming can be a software programming, which uses a computer program code.

Fig. 2 shows a flow diagram of the method 10 for the quantitative fluorescence measurements of at least one biochemical or biological sample 5. The typical task is to determine the concentrations of multiple analytes in multiple separate samples or one single sample and to accurately compare the determined concentrations. The method 10 is suitable to achieve a sufficient accuracy of such a measurement with subsequent comparison of the detected concentrations of the analytes. The method 10 is run automatically by the laboratory apparatus 1 and provides said accurate measurements without any substantial additional user interaction, which is comfortable for the user and increases the efficiency of the work flow in a laboratory.

Initially, the method 10 provides an adjustment step 11 of the laboratory apparatus. Said adjustment provides the use of three optical standard samples, e.g. user prepared standard samples, for determining the reference point ($S\_ref$; $I\_ref$) in step 11, which is a standardization point ($S\_fix$; $I\_fix$). The single standardization point ($S\_fix$; $I\_fix$) is used to accurately determine the measured quantities $C\_m1 ... C\_mN$ of multiple analytes, using multiple sensitivity parameters $S\_m1 ... S\_mM$.

In case of the present embodiment, two standardization points ($S\_fix$; $I\_fix$)-1 and ($S\_fix$; $I\_fix$)-2 are determined (not shown), wherein ($S\_fix$; $I\_fix$)-1 is determined using the characteristical wavelength of 520 nm of the detector device for detecting only light at 520 nm (i.e. within a rather narrow spectrum around 520 nm), and ($S\_fix$; $I\_fix$)-2 is determined using the characteristical wavelength of 560 nm. The following steps are described for the measurement at 520 nm and have to be repeated for measuring at 560 nm, in the embodiment.

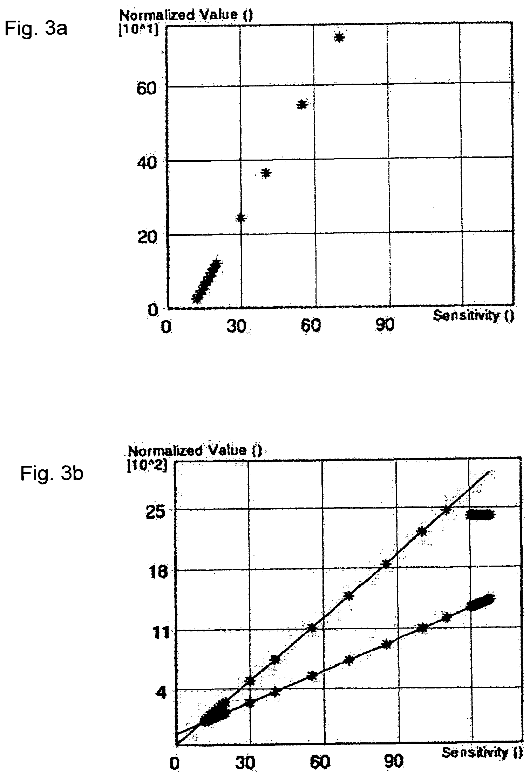

In step 12 of the determination of the standardization point ($S\_fix$; $I\_fix$), a first dataset of multiple points ($S\_1$; $I\_1$) is determined, at the characteristical wavelength of 520 nm. This means that for the first optical standard sample a predetermined light intensity is illuminating the samples, and the excited sample light is detected by the detector device, while using multiple (at least two) different sensitivity parameters $S\_1$. For each value of $S\_1$, the intensity $I\_1$ of the sample light is detected, measured and stored. The resulting dataset is graphically shown in the diagram of Fig. 3a.

A first straight line $I\_1(S)$ is fitted through the points of said dataset. Generally, two points of the dataset are sufficient to draw a line. Providing multiple points, however, increases the accuracy of the estimation method. Said estimation method can be conventional, using a conventional curve fitting method to fit a straight line through (or between) the points of the dataset, e.g. a fitting method using least squares approximation. Preferably, at least (and/or a maximum of) 2, 3, 4, 5, 6, 7, 8, 9, 10, 11, 12, 13, 14, 15, 20, 25, 30, 35, 40, 50 or a different number of points are used for determining the dataset, which efficiently defines the straight line. Preferably, additionally algorithms are provided for sorting out outliers, which occur due to noise or signal saturation.

In step 13 of the determination of the standardization point (S_fix; I_fix), a second dataset of multiple points (S_2; I_2) is determined. This means that for the second optical standard sample the predetermined light intensity is illuminating the sample, and the excited sample light is detected by the detector device (at the same characteristical wavelengths), while using multiple (at least two) different sensitivity parameters S_2. For each value of S_2, the intensity I_2 of the sample light is detected, measured and stored. The resulting dataset is graphically shown in the diagram of Fig. 3b, in addition to the dataset (S_1; I_1).

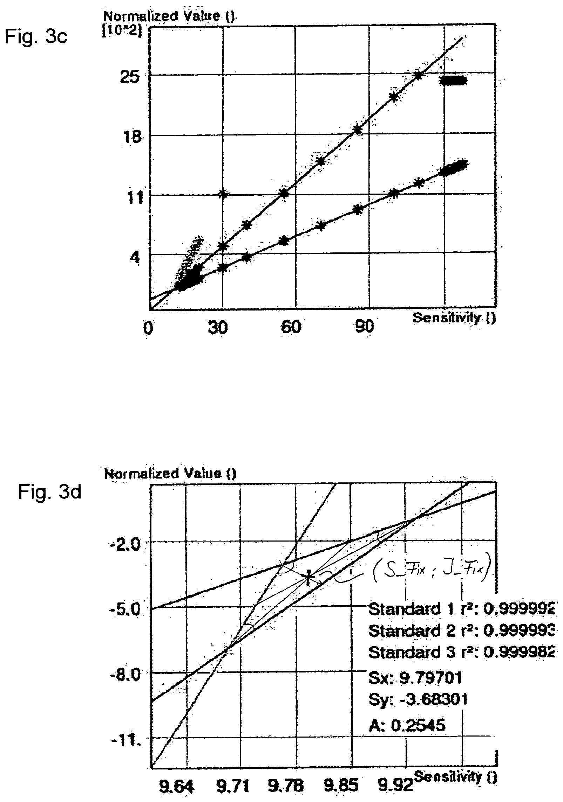

In step 14 of the determination of the standardization point (S_fix; I_fix), a third dataset of multiple points (S_3; I_3) is determined. This means that for the third optical standard sample the predetermined light intensity is illuminating the samples, and the excited sample light is detected by the detector device (at the same characteristical wavelengths), while using multiple (at least two) different sensitivity parameters S_3. For each value of S_3, the intensity I_3 of the sample light is detected, measured and stored. The resulting dataset is graphically shown in the diagram of Fig. 3c, in addition to the datasets (S_1; I_1) and (S_2; I_2).

Respectively, a straight line I_1 (S) and I_2(DS) is fitted to the dataset (S_1; I_1) and (S_2; I_2).

In step 15 of the determination of the standardization point (S_fix; I_fix), the three intersection points IS1, IS2, IS3 of the three pairs of straight lines (I_1(S); I_2(S)), (I_2(S); I_3(S)), and (I_1(S); I_3(S)) are determined. The standardization point is determined to be the intersection point of the bisecting lines of the three angles of the triangle defined by the three intersection points IS1, IS2, IS3. The size of the area of the triangle can be used to evaluate the quality factor of the method of determining the standardization point. The intersection point is determined numerically, e.g. by the electric control device of a laboratory apparatus. The "geometrical" method of determining the standardization point (S_fix; I_fix) to be the intersection point of the bisecting lines of the three angles of the triangle defined by the three intersection points IS1, IS2, IS3 is shown in Fig. 3d.

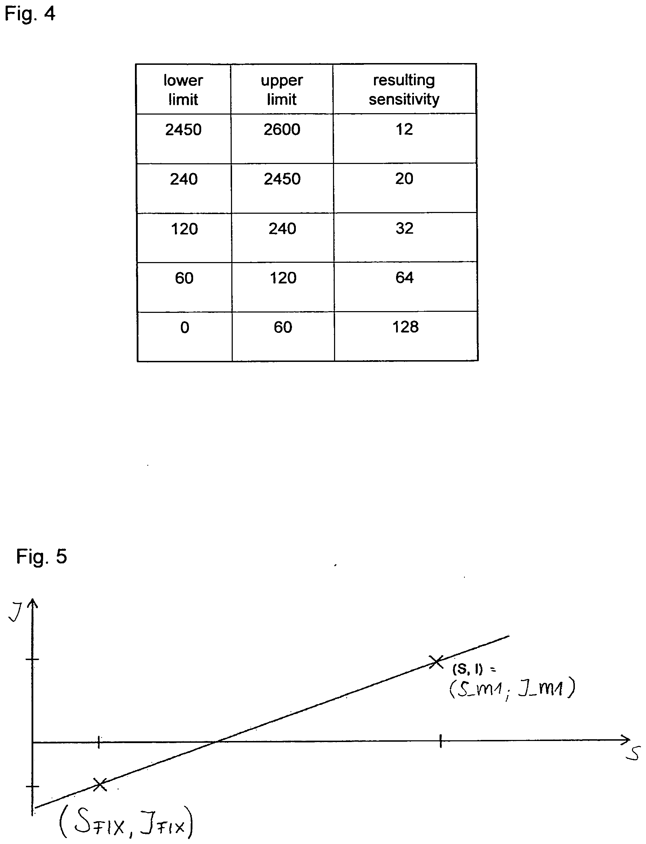

In step 16 of the method 10, the sensitivity S_m1 is automatically determined, which is suitable to measure the intensity of the sample light, which is assigned to the first analyte to be measured. The measurement starts with a default value of S_m1 and determines I_m1. A table (e.g. the table in Fig. 4) can be used to check if the detected value of I_m1 is comprised by the ranges of intensities (Fig. 4, "lower limit"; "upper limit") which are comprised in the table, and to determine the associated value of S_m1 (Fig. 4, "resulting sensitivity") in the table, which is assigned to the range of intensities comprising the measured I_m1. If the measured value of I_m1 is not comprised in the ranges of intensities according to the table, the step 16 automatically is repeated with another value of S_m1, until a valid value S_m1 is found. The intensity I_m1, which is associated to the valid value of S_m1 is stored.

In step 17 of the method 10, the standardization point (S_fix; I_fix) is utilized for calculating a first analyte value C_m1, which is characteristic for a property of the first analyte, in particular for a concentration of the first analyte in the at least one sample, according to the formula C_m1 = (I_m1 - I_ref) / (S_m1 - S_ref). C_m1 is the slope of the straight line, which runs through the two points (S_fix; I_fix) and (S_m1; I_m1). This is graphically shown in Fig. 5.

In step 18 of the method 10, the value of the concentration CON1 of the analyte in the sample is calculated from C_m1, preferably according to CON1 = a(C_m1 - C_m0), wherein a is a factor or a function, which is predetermined by a conventional calibration method and C_m0 is the result of measurement of the background fluorescence of the optical system, which comprises at least the parts of the optical path in the laboratory apparatus, the sample holder, sample receptacle, and the solution without the analytes. A conventional calibration method can comprise the steps of providing a set of samples, which each contain a sample analyte in a predetermined concentration, and by recording the intensities, which correspond to the sample, in particular using a standard source light, which can have standard intensity, standard frequency, preferably using standard illumination and/or detection times and/or a standard output energy of the light source.

The method steps 16 to 18 can be repeated for multiple samples and multiple analytes, using the same or another standardization point (S_fix; I_fix), for one of the characteristical wavelengths of detection or for multiple wavelength, to receive accurate results of the measurements, which can be accurately compared by calculation steps, in particular.

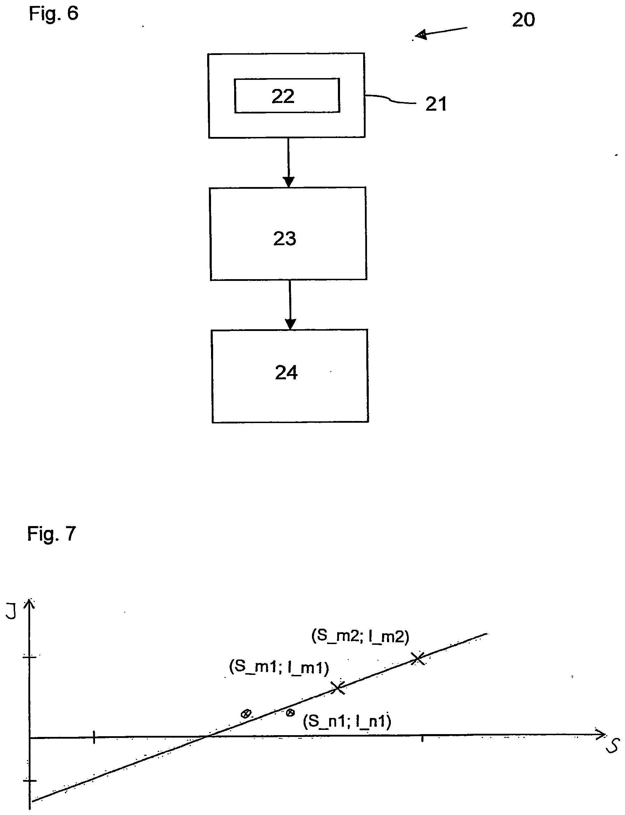

In Fig. 6, an alternative method is shown, namely the method 20. Instead of calculating the reference point (S_ref; I_ref) to be a common standardization point, the reference point is calculated in step 21 using the sample with the first analyte, instead of utilizing an optical standard sample. The method is preferably run at only one wavelength of detection, but can also be run once for each characteristical wavelength of detection. Method 20 comprises the step 22 of using at least one further sample light assigned to the first analyte for letting the detector device detect at least one reference light from the sample, by determining a dataset with the points (S_m1; I_m1) and (S_m2; I_m2) with pairs of the measured intensity I_m1 (I_m2)in dependence from the variable sensitivity parameter S_m1 (S_m2). Herein, the values S_m1, S_m2 are determined such that "valid" values of I_m1, I_m2 are detected, e.g. by using a table as shown in Fig. 4; step 22 utilizes (S_m2; I_m2) to determine the at least one reference point to be (S_ref; I_ref) = (S_m2; I_m2). The two points are used, in step 23, to derive C_m1 as the slope of the straight line, which runs through the two points (S_m1; I_m1) and (S_m2; I_m2). This is graphically shown in Fig. 7. In step 24, the value of the concentration CON1 of the analyte in the sample is calculated from C_m1, preferably according to CON1 = a(C_m1 - C_m0), wherein a is a factor or function, which is predetermined by a conventional calibration method and C_m0 the result of a measurement of the background fluorescence. In case that a more extended measurement time is acceptable, multiple reference points S_n1; I_n1) can be used to even more precisely define the straight line and to derive the slope using conventional regression methods, which leads to a more precise measurement of CON1. The same method 20 can be applied to each analyte.

**Claims**

1. Method (10; 20) for the quantitative optical measurement of a characteristic property of at least one analyte in at least one laboratory sample, in particular for the fluorescence measurement of at least one biochemical or biological sample, the method using a laboratory apparatus, which has at least one light source and at least one detector device, the apparatus utilizing at least one sensitivity parameter S, which controls the capability of the laboratory apparatus to detect a signal by means of the at least one detector device, wherein the sensitivity parameter is varied by variation of at least one operational parameter of the detector device, e.g. an electronic gain factor, or wherein the sensitivity parameter is varied by variation of the intensity of source light, which is used to measure the at least one analyte in the at least one sample,
the method using the light source for emitting the source light for causing the at least one sample to emit a sample light, and the at least one detector device for detecting sample light and the method utilizing the at least one sensitivity parameter S to detect the corresponding at least one intensity I of the sample light, the method comprising the steps:

   • determining at least one reference point (S_ref; I_ref);
   • using at least one first sensitivity parameter S_m1, which is not the same as the parameter S_ref, for measuring at least one first intensity I_m1 of sample light assigned to a first analyte in the sample to obtain at least one measurement point (S_m1; I_m1);
   • determining a quantity Q1, which is the slope of a line, which is determined by utilizing the at least one reference point (S_ref; I_ref) and the at least one measurement point (S_m1; I_m1), wherein Q1 is calculated according to the formula Q1 = (I_m1 - I_ref) / (S_m1 - S_ref); or according to an interpolation function or a regression function through (S_ref; I_ref) and multiple different measurement points (S_m1; I_m1),
   • using the quantity Q1 for calculating a first analyte value C_m1, which is proportional to Q1 and which is characteristic for a property of the first analyte, in particular for a concentration CON1 of the first analyte in the at least one sample, wherein CON1 can be calculated according to CON1 = a(C_m1) or CON1 = a (C_m1 - C_m0), wherein a is a predetermined function or a constant, which is in particular determinable using a conventional calibration method, and wherein C_m0 is the value of a blank sample, which does not contain the analyte,

wherein the reference point (S_ref; I_ref) is a standardization point (S_fix; I_fix) = (S_ref; I_ref) and the step of determining the standardization point (S_fix; I_fix) comprises the steps:

   • using the source light and at least one optical standard sample for letting the at least one standard sample emit at least one standard sample light, and letting the detector device detect the at least one standard sample light for determining at least the first intensity I_1 of a first standard sample light as a first function of the variable sensitivity parameter S of the detector device, according to I_1(S) = c1 * (S - S_1_0) + I_1 0, wherein c1 is a factor depending on the first optical standard sample and S_1_0 and I_1_0 are the parameters for defining the straight line;
   • utilizing at last one second function I_2(S);
   • determining (S_fix; I_fix) to be an intersection point between the at least two functions I_1(S) and I_2(S).

2. Method according to claim 1, wherein in the step of determining a standardization point, the second function I_2(S) is a constant, according to I_2(S) = constant.

3. Method according to claim 1, wherein in the step of determining the standardization point, at least a further optical standard sample is used, for additionally determining the second intensity I_2 of at least also the second standard sample light as the second function I_2(S) of the variable sensitivity parameter S, according to I_2(S) = c2 * (S - S_2_0) + I_2_0, wherein c2 is a factor depending on the second optical standard sample and S_2_0 and I_2_0 are the parameters for defining the straight line;.

4. Method according to claim 3, wherein the step of determining the standardization point comprises the steps:

 • utilizing at least three optical standard samples to determine the three intensities of at least three standard sample lights as the functions I_1(S), I_2(S) and I_3(S);
 • determining the intersection point (S_fix; I_fix) to be an estimated intersection point of the at least three functions I_1(S), I_2(S) and I_3(S), using a mathematical estimation method.

5. Method according to claim 4, wherein the estimation method provides the following steps:

 • determining (S_fix; I_fix) to be a point within an area, which is enframed by the at least three functions I_1(S), I_2(S) and I_3(S).

6. Method according to claim 4 or 5, wherein three optical standard samples are used to determine three straight line functions I_1(S), I_2(S) and I_3(S), and wherein the estimation method provides the following steps:

 • determining the three intersection points IS1, IS2, IS3 of the three pairs of straight lines (I_1(S); I_2(S)), (I_2(S); I_3(S)), and (I_1(S); I_3(S));
 • determining the estimated intersection point (S_fix; I_fix) to be the intersection point of the bisecting lines of the three angles of the triangle defined by the three intersection points IS1, IS2, IS3.

7. Method according to any of the previous claims 1 to 6, further comprising the step of letting the detector device detect the intensity of the sample light in dependence on at least one predetermined characteristical wavelength of detection, and wherein the at least one reference point(s) (S_ref; I_ref) is respectively determined in dependence on the characteristical wavelength, thus assigning the at least one reference point(s) (S_ref; I_ref) to each characteristical wavelength of detection.

8. Laboratory apparatus for quantitative optical measurements of a characteristic property of at least one analyte in at least one laboratory sample, in particular fluorescence measurements of at least one biochemical or biological sample, comprising at least one light source for illuminating the at least one sample with source light, at least one detector device for detecting sample light, and an electric control device, wherein the electric control device is configured to at least automatically calculate, using the method according to any of the claims 1 to 7, in dependence on Q1, the first analyte value C_m1, which is characteristic for a property of the first analyte, in particular for a concentration of the first analyte in the at least one sample.

9. Laboratory apparatus according to claim 8, which is configured to be a fluorometer, or a fluorescence spectrometer, or a realtime PCR instrument.

10. Use of the method according to any of the claims 1 to 7 or the apparatus according to claim 8 or 9 to optically measure the fluorescence light of biochemical samples or biological samples, in particular PCR samples.

**Patentansprüche**

1. Verfahren (10; 20) zur quantitativen optischen Messung einer charakteristischen Eigenschaft mindestens eines Analyten in mindestens einer Laborprobe, insbesondere zur Fluoreszenzmessung mindestens einer biochemischen oder biologischen Probe, wobei das Verfahren eine Laborvorrichtung verwendet, die mindestens eine Lichtquelle und mindestens eine Detektoreinrichtung aufweist, wobei die Vorrichtung mindestens einen Empfindlichkeitsparameter S verwendet, der die Fähigkeit der Laborvorrichtung steuert, ein Signal mittels der mindestens einen Detektoreinrichtung zu detektieren, wobei der Empfindlichkeitsparameter durch eine Variation mindestens eines Betriebsparameters der Detektoreinrichtung variiert wird, z.B. einen elektronischen Verstärkungsfaktor oder wobei der Empfindlichkeitsparameter durch Variation der Intensität des Quellenlichts variiert wird, das zur Messung des mindestens einen Analyten in der mindestens einen Probe verwendet wird,
wobei das Verfahren das Quellenlicht als Emissionsquelle verwendet, was die mindestens eine Probe veranlasst, ein Probenlicht zu emittieren, und die mindestens eine Detektorvorrichtung veranlasst das Probenlichts zu erfassen und das Verfahren den mindestens einen Empfindlichkeitsparameter S verwendet, um die entsprechende mindestens eine Intensität I des Probenlichts zu erfassen, wobei das Verfahren die Schritte aufweist:

 • Bestimmung mindestens eines Referenzpunktes (S_ref; I_ref);
 • Verwendung mindestens eines ersten Empfindlichkeitsparameters S_m1, der nicht mit dem Parameter S_ref übereinstimmt, zur Messung mindestens einer ersten Intensität I_m1 des Probenlichts, die einem ersten Analyten in der Probe zugeordnet ist, um mindestens einen Messpunkt (S_m1: I_m1) zu erhalten;

• Bestimmung einer Größe Q1, die die Steigung einer Linie ist, die unter Verwendung des mindestens einen Referenzpunktes (S_ref; I_ref) und des mindestens einen Messpunktes (S_m1; I_m1) bestimmt wird,

wobei Q1 gemäß der Formel Q1 = (I_m1 - I_ref) / (S_m1 - S_ref) berechnet wird; oder gemäß einer Interpolationsfunktion oder einer Regressionsfunktion durch (S_ref; I_ref) und mehrere verschiedene Messpunkte (S_m1; I_m1),

• Verwendung der Menge Q1 zur Berechnung eines ersten Analytwertes C_m1, der proportional zu Q1 ist und der für eine Eigenschaft des ersten Analyten charakteristisch ist, insbesondere für eine Konzentration CON1 des ersten Analyten in der mindestens einen Probe, wobei CON1 gemäß CON1 = a (C_m1) oder CON1 = a (C_m1 - C_m0) berechnet werden kann, wobei a eine vorgegebene Funktion oder eine Konstante ist, die insbesondere mit einem herkömmlichen Kalibrierverfahren bestimmbar ist, und wobei C_m0 der Wert einer Blindprobe ist, die den Analyten nicht enthält,

wobei der Referenzpunkt (S_ref; I_ref) ein Standardisierungspunkt (S_fix; I_fix) = (S_ref; I_ref) ist und der Schritt der Bestimmung des Standardisierungspunktes (S_fix; I_fix) die Schritte aufweist

• Verwendung des Quellenlichts und mindestens einer optischen Standardprobe, um die mindestens eine Standardprobe mindestens ein Standardprobenlicht aussenden zu lassen, und um die Detektorvorrichtung das mindestens eine Standardprobenlicht detektieren zu lassen, um mindestens die erste Intensität I_1 eines ersten Standardprobenlichts als eine erste Funktion des variablen Empfindlichkeitsparameters S der Detektorvorrichtung zu bestimmen, gemäß I_1(S) = c1 * (S - S_1_0) + I_1_0, wobei c1 ein von der ersten optischen Standardprobe abhängiger Faktor ist und S_1_0 und I_1_0 die Parameter zur Definition der Geraden sind;

• Verwendung von mindestens einer zweiten Funktion I_2(S);

• Bestimmung (S_fix; I_fix) als Schnittpunkt zwischen den mindestens zwei Funktionen I_1(S) und I_2(S).

2. Verfahren nach Anspruch 1, wobei in dem Schritt der Bestimmung eines Standardisierungspunktes die zweite Funktion I_2(S) eine Konstante ist, gemäß I_2(S) = konstant.

3. Verfahren nach Anspruch 1, wobei im Schritt der Bestimmung des Standardisierungspunktes mindestens eine weitere optische Standardprobe verwendet wird, um zusätzlich die zweite Intensität I_2 des Lichts der mindestens zweiten Standardprobe als zweite Funktion I_2(S) des variablen Empfindlichkeitsparameters S zu bestimmen, gemäß I_2(S) = c2 * (S - S_2_0) + I_2_0, wobei c2 ein von der zweiten optischen Standardprobe abhängiger Faktor ist und S_2_0 und I_2_0 die Parameter zur Bestimmung der Geraden sind.

4. Verfahren nach Anspruch 3, wobei der Schritt der Bestimmung des Standardisierungspunktes, die Schritte aufweist:

• Verwendung von mindestens drei optischen Standardproben zur Bestimmung der drei Intensitäten des Lichts von mindestens drei Standardproben als die Funktionen I_1(S), I_2(S) und I_3(S);

• Bestimmung des Schnittpunkts (S_fix; I_fix) als geschätzten Schnittpunkt der mindestens drei Funktionen I_1(S), I_2(S) und I_3(S) mit Hilfe einer mathematischen Schätzmethode.

5. Methode nach Anspruch 4, wobei die Schätzmethode die folgenden Schritte vorsieht:

• Bestimmung (S_fix; I_fix) als Punkt innerhalb einer Fläche, die von den mindestens drei Funktionen I_1(S), I_2(S) und I_3(S) eingerahmt wird.

6. Verfahren nach Anspruch 4 oder 5, wobei drei optische Standardproben verwendet werden, um drei geradlinige Funktionen I_1(S), I_2(S) und I_3(S) zu bestimmen, und wobei das Schätzverfahren die folgenden Schritte vorsieht:

• Bestimmung der drei Schnittpunkte IS1, IS2, IS3 der drei Paare der drei Geradenpaare (I_1(S); I_2(S)), (I_2(S); I_3(S)) und (I_1(S); I_3(S));

• Bestimmung des geschätzten Schnittpunkts (S_fix; I_fix) als Schnittpunkt der Halbierungslinien der drei Winkel des durch die drei Schnittpunkte IS1, IS2, IS3 definierten Dreiecks.

7. Verfahren nach einem der vorhergehenden Ansprüche 1 bis 6, das weiterhin den Schritt aufweist, die Detektorvorrichtung die Intensität des Probenlichts in Abhängigkeit von mindestens einer vorbestimmten charakteristischen Detektionswellenlänge detektieren zu lassen, und wobei der mindestens eine Referenzpunkt(e) (S_ref; I_ref) jeweils in Abhängigkeit von der charakteristischen Wellenlänge bestimmt wird, wodurch der mindestens eine Referenzpunkt(e) (S_ref; I_ref) jeder charakteristischen Detektionswellenlänge zugeordnet wird.

8. Laborgerät für quantitative optische Messungen einer charakteristischen Eigenschaft mindestens eines Analyten in mindestens einer Laborprobe, insbesondere Fluoreszenzmessungen mindestens einer biochemischen oder biologischen Probe, aufweisend mindestens eine Lichtquelle zur Beleuchtung der mindestens einen Probe mit Quellenlicht, mindestens eine Detektoreinrichtung zum Nachweis des Probenlichts, und eine elektrische Steuervorrichtung, wobei die elektrische Steuervorrichtung eingerichtet ist, unter Verwendung des Verfahrens nach einem der Ansprüche 1 bis 7 in Abhängigkeit von Q1 zumindest automatisch den ersten Analytwert C_m1 zu berechnen, der für eine Eigenschaft des ersten Analyten, insbesondere für eine Konzentration des ersten Analyten in der mindestens einen Probe, charakteristisch ist.

**9.** Laborgerät nach Anspruch 8, das als Fluorometer oder Fluoreszenzspektrometer oder als Echtzeit-PCR-Instrument eingerichtet ist.

**10.** Verwendung der Methode nach einem der Ansprüche 1 bis 7 oder der Apparatur nach Anspruch 8 oder 9 zur optischen Messung des Fluoreszenzlichts von biochemischen Proben oder biologischen Proben, insbesondere PCR-Proben.

**Revendications**

**1.** Procédé (10 ; 20) pour la mesure optique quantitative d'une propriété caractéristique d'au moins un analyte dans au moins un échantillon de laboratoire, en particulier pour la mesure de fluorescence d'au moins un échantillon biologique ou biochimique, le procédé utilisant un appareil de laboratoire, qui a au moins une source de lumière et au moins un dispositif de détection, l'appareil exploitant au moins un paramètre de sensibilité S, qui contrôle la capacité de l'appareil de laboratoire à détecter un signal aux moyens de l'au moins un dispositif de détection, dans lequel le paramètre de sensibilité est modifié par variation d'au moins un paramètre opérationnel du dispositif de détection, e.g. un facteur de gain électronique, ou dans lequel le paramètre de sensibilité est modifié par variation de l'intensité d'une lumière source, qui est utilisée pour mesurer l'au moins un analyte dans l'au moins un échantillon, le procédé utilisant la source de lumière pour émettre la lumière source afin d'induire l'émission d'une lumière d'échantillon par l'au moins un échantillon, et l'au moins un dispositif de détection pour détecter la lumière d'échantillon et le procédé exploitant l'au moins un paramètre de sensibilité S pour détecter l'au moins une intensité I correspondante de la lumière d'échantillon, le procédé comprenant les étapes suivantes :

• détermination d'au moins un point de référence (S_ref ; I-ref) ;
• utilisation d'au moins un premier paramètre de sensibilité S_m1, qui n'est pas le même que le paramètre S_ref, afin de mesurer au moins une première intensité I_m1 de lumière d'échantillon assignée à un premier analyte dans l'échantillon pour obtenir au moins un point de mesure (S_m1 ; I_m1) ;
• détermination d'une quantité Q1, qui est la pente d'une droite, qui est déterminée à l'aide de l'au moins un point de référence (S_ref ; I-ref) et de l'au moins un point de mesure (S_m1 ; I_m1),
dans lequel Q1 est calculé selon la formule Q1 = (I_m1 - I_ref)/(S_m1-S-ref) ; ou selon une fonction d'interpolation ou une fonction de régression via (S_ref ; I-ref) et de multiples points de mesure différents (S_m1 ; I_m1),
• utilisation de la quantité Q1 pour calculer une première valeur d'analyte C_m1, qui est proportionnelle à Q1 et qui est caractéristique d'une propriété du premier analyte, en particulier d'une concentration CON1 du premier analyte dans l'au moins un échantillon, dans lequel CON1 peut être calculé selon la formule CON1 = a(C_m1) ou la formule CON1 = a(C_m1 - C_m0), dans lequel a est une fonction prédéterminée ou une constante, qui peut être en particulier déterminée en utilisant une méthode de calibration conventionnelle, et dans lequel C_m0 est la valeur d'un échantillon de blanc, qui ne contient pas l'analyte,

dans lequel le point de référence (S_ref ; I-ref) est un point d'étalonnage (S_fix ; I_fix) = (S_ref ; I-ref) et l'étape de détermination du point d'étalonnage (S_fix ; I_fix) comprend les étapes :

• utilisation de la lumière source et d'au moins un échantillon optique étalon pour permettre à l'au moins un échantillon étalon d'émettre au moins une lumière d'échantillon étalon, et possibilité pour le dispositif de détection de détecter l'au moins une lumière d'échantillon étalon afin de déterminer au moins la première intensité I_1 d'une première lumière d'échantillon étalon comme étant une première fonction du paramètre variable de sensibilité S du dispositif de détection, selon la formule I_1(S) = c1 * (S - S_1_0) + I_1_0, dans lequel c1 est un facteur qui dépend du premier échantillon optique étalon et S_1_0 et I_1_0 sont des paramètres définissant la droite linéaire ;
• exploitation d'au moins une deuxième fonction I_2(S) ;
• détermination de (S_fix ; I_fix) comme étant un point d'intersection entre les au moins deux fonctions I_1(S) et I_2(S).

2. Procédé selon la revendication 1, dans lequel dans l'étape de détermination d'un point d'étalonnage, la deuxième fonction I_2(S) est une constante, selon la formule I_2(S) = constante.

3. Procédé selon la revendication 1, dans lequel dans l'étape de détermination du point de d'étalonnage, au moins un échantillon optique étalon supplémentaire est utilisé, afin de déterminer additionnellement la deuxième intensité I_2 d'au moins également la deuxième lumière d'échantillon étalon comme étant la deuxième fonction I_2(S) du paramètre variable de sensibilité S, selon la formule I_2(S) = c2 * (S - S_2_0) + I_2_0, dans lequel c2 est un facteur qui dépend du deuxième échantillon optique étalon et S_2_0 et I_2_0 sont des paramètres définissant la droite linéaire.

4. Procédé selon la revendication 3, dans lequel l'étape de détermination du point de d'étalonnage comprend les étapes :

   • exploitation d'au moins trois échantillons optiques étalons pour déterminer les trois intensités d'au moins trois lumières d'échantillon étalon comme étant les fonctions I_1 (S), I_2(S) et I_3(S) ;
   • détermination du point d'intersection (S_fix ; I_fix) comme étant un point d'intersection estimé des au moins trois fonctions I_1(S), I_2(S) et I_3(S), en utilisant une méthode d'estimation mathématique.

5. Procédé selon la revendication 4, dans lequel la méthode d'estimation fournit les étapes suivantes :

   • détermination de (S_fix ; I_fix) comme étant un point dans une zone, qui est encadrée par les au moins trois fonctions I_1(S), I_2(S) et I_3(S).

6. Procédé selon la revendication 4 ou 5, dans lequel les trois échantillons optiques étalons sont utilisés pour déterminer trois fonctions linéaires I_1(S), I_2(S) et I_3(S), et dans lequel la méthode d'estimation fournit les étapes suivantes :

   • détermination des trois points d'intersection IS1, IS2, IS3 des trois paires de droites linéaires (I_1(S) ; I_2(S)), (I_2(S) ; I_3(S)), et (I_1(S) ; I_3(S)) ;
   • détermination du point d'intersection estimé (S_fix ; I_fix) comme étant le point d'intersection des bissectrices des trois angles du triangle défini par les trois points d'intersection IS1, IS2, IS3.

7. Procédé selon l'une quelconque des revendications précédentes 1 à 6, comprenant en outre l'étape permettant au dispositif de détection de détecter l'intensité de la lumière d'échantillon en fonction d'au moins une longueur d'onde de détection caractéristique prédéterminée, et dans lequel les au moins un ou plusieurs points de référence (S_ref ; I_ref) sont déterminés respectivement en fonction de la longueur d'onde caractéristique, attribuant ainsi les au moins un ou plusieurs points de référence (S_ref ; I_ref) à chaque longueur d'onde de détection caractéristique.

8. Appareil de laboratoire pour des mesures optiques quantitatives d'une propriété caractéristique d'au moins un analyte dans au moins un échantillon de laboratoire, en particulier des mesures de fluorescence d'au moins un échantillon biologique ou biochimique, comprenant au moins une source de lumière afin d'éclairer l'au moins un échantillon avec la lumière source, au moins un dispositif de détection afin de détecter la lumière d'échantillon, et un dispositif de commande électrique, dans lequel le dispositif de commande électrique est conçu pour au moins calculer automatiquement, en utilisant le procédé selon l'une quelconque des revendications 1 à 7, en fonction de Q1, la première valeur d'analyte C_m1, qui est caractéristique d'une propriété du premier analyte, en particulier d'une concentration du premier analyte dans l'au moins un échantillon.

9. Appareil de laboratoire selon la revendication 8, qui est conçu pour être un fluoromètre, ou un spectromètre de fluorescence, ou un instrument de PCR en temps réel.

10. Utilisation du procédé selon l'une quelconque des revendications 1 à 7 ou de l'appareil selon la revendication 8 ou 9 pour mesurer optiquement la lumière de fluorescence d'échantillons biochimiques ou d'échantillons biologiques, en particulier d'échantillons de PCR.

Fig. 1

Fig. 2

Fig. 3a

Fig. 3b

Fig. 3c

Fig. 3d

Fig. 4

| lower limit | upper limit | resulting sensitivity |
|---|---|---|
| 2450 | 2600 | 12 |
| 240 | 2450 | 20 |
| 120 | 240 | 32 |
| 60 | 120 | 64 |
| 0 | 60 | 128 |

Fig. 5

Fig. 6

20

22

21

23

24

Fig. 7

J

(S_m2; I_m2)

(S_m1; I_m1)

(S_n1; I_n1)

S

**EP 2 584 342 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1431745 A1